# EUROPÄISCHE PATENTANMELDUNG

(11) **EP 1 265 346 A2**
(43) Veröffentlichungstag der Anmeldung: **11.12.2002**
(21) Anmeldenummer: 02012131.5
(22) Anmeldetag: 01.06.2002
(51) Int. Cl.: H02M 5/257, H02M 1/08

(54) **Vorrichtung und Verfahren zur Leistungssteuerung von an ein Wechselspannungs-Versorgungsnetz angeschlossenen elektrischen Verbrauchern**

(30) Priorität: 05.06.2001 DE 10127777
(71) Anmelder: Kurz, Gerhard, D-75382 Althengstett (DE)
(72) Erfinder: Schulz, Detlef, 72657 Altenriet (DE); Frey, Stefan, 72226 Simmersfeld (DE)
(74) Vertreter: Lindner, Michael, Dipl.-Ing.

(57) **Zusammenfassung**

Die Erfindung betrifft ein Verfahren und eine Vorrichtung zur Leistungssteuerung von an ein Wechselspannungs-Versorgungsnetz angeschlossenen elektrischen Verbrauchern, mit einem in Reihe mit dem Verbraucher liegenden Schaltungselement (12, 13) (TRIAC), das von einem Zündelement (24) (DIAC) zur Ausführung eines Phasenanschnitts angesteuert wird, und einer Steuereinrichtung (20, 21,30), die dem Zündelement eine bis zu einer vorgegebenen Zündspannung ansteigende Steuerspannung zuführt, mit der der Winkel des Phasenanschnitts (Phasenwinkel) einstellbar ist. Die Vorrichtung zeichnet sich dadurch aus, daß die Steuereinrichtung 30 eine Schalteinheit (32), eine Spannungsstabilisierungseinheit (34) und eine Phasenanschnittsteuereinheit (36) aufweist, wobei die Schalteinheit (32) von der Phasenanschnittsteuereinheit (36) angesteuert wird, derart, daß sie die Spannungsstabilisierungseinheit (34) während einer Halbwelle für eine vorgebbare den Phasenwinkel bestimmende Zeitdauer (Δt) aktiviert, um die Steuerspannung während dieser Zeitdauer im wesentlichen konstant zu halten (Fig. 1).

## Beschreibung

Die vorliegende Erfindung betrifft eine Vorrichtung zur Leistungssteuerung von an ein Wechselspannungs-Versorgungsnetz angeschlossenen elektrischen Verbrauchern, mit einem in Reihe mit dem Verbraucher liegenden Schaltungselement, vorzugsweise einem TRIAC, daß von einem Zündelement, vorzugsweise einem DIAC, zur Ausführung eines Phasenanschnitts angesteuert wird, und einer Steuereinrichtung, die dem Zündelement eine bis zu einer vorgegebenen Zündspannung ansteigende Steuerspannung zuführt, mit der der Winkel des Phasenanschnitts (Phasenwinkel) einstellbar ist. Die Erfindung betrifft ferner ein entsprechendes Verfahren zur Leistungssteuerung von an ein Wechselspannungs-Versorgungsnetz angeschlossenen elektrischen Verbrauchern.

Eine Vorrichtung und ein Verfahren der vorgenannten Art sind beispielsweise aus der Anmeldung DE 198 50 905 A1 der Anmelderin bekannt. Allgemein sind derartige Vorrichtungen als sogenannte Phasenanschnittsteuerungen bekannt. Sie dienen dazu, die einem elektrischen Verbraucher zugeführte Leistung zu steuern, indem der Verbraucher über ein Schaltungselement periodisch ein- und ausgeschaltet wird. Üblicherweise wird als Schaltungselement ein TRIAC eingesetzt, das in Reihe mit dem Verbraucher liegt und über eine Steuereinrichtung gezündet wird. Die Steuereinrichtung umfaßt eine Reihenschaltung aus einem Widerstand und einem Zündkondensator, die parallel zum TRIAC angeordnet ist. Das Zündsignal wird zwischen dem Widerstand und dem Zündkondensator abgegriffen und über eine Reihenschaltung aus einem Widerstand und einem als DIAC ausgebildeten Zündelement dem Steuereingang (Gate) des TRIACS zugeführt.

Im Betrieb wird der Kondensator durch die der Phasenanschnittsteuerung zugeführte Wechselspannung über den Widerstand aufgeladen, so daß die Spannung am Kondensator steigt. Sobald ein bestimmter Spannungswert (Zündspannung) erreicht ist, schaltet der DIAC durch und zündet den TRIAC, so daß der Verbraucher eingeschaltet wird. Der TRIAC bleibt bis zum nächsten Nulldurchgang des Stroms in seinem leitenden Zustand. Dieser Vorgang wiederholt sich periodisch für jede Halbwelle der Wechselspannung.

Die Leistungssteuerung erfolgt nun beispielsweise dadurch, daß der Widerstandswert des in Reihe zu dem Zündkondensator liegenden Widerstands verändert wird. Damit läßt sich die Ladezeit zum Erreichen der notwendigen Zündspannung verändern, mit dem Ergebnis, daß auch die Zeitdauer, während der der TRIAC leitend ist, verändert wird. Als veränderbarer Widerstand dient üblicherweise ein Potentiometer, an das bezüglich Spannungs- und Stromfestigkeit hohe Anforderungen gestellt werden. Ein solches Potentiometer ist teuer, da es sich nicht um ein Standardbauteil handelt, und baut sehr groß, so daß einer Miniaturisierung der Schaltung Grenzen gesetzt sind.

In der zuvor genannten früheren Anmeldung der Anmelderin ist eine Lösung beschrieben, bei der nicht der Widerstand sondern statt dessen der Kapazitätswert des Zündkondensators auf elektronische Art und Weise verändert wird, um einen gewünschten Phasenwinkel einzustellen. Mit Hilfe dieser Lösung läßt sich der bauliche Aufwand deutlich verringern.

Dennoch bleibt der Wunsch, weitere Vereinfachungen und Kosteneinsparungen zu erzielen, insbesondere durch Einsatz kostengünstigerer Bauelemente, ohne jedoch die Funktionsweise zu verschlechtern, sondern nach Möglichkeit noch zu verbessern.

Vor diesem Hintergrund besteht die Aufgabe der vorliegenden Erfindung darin, die Vorrichtung der Eingangs genannten Art so weiterzubilden, daß deren Aufbau mit kostengünstigeren Bauelementen ohne Verschlechterung der Funktion möglich wird.

Diese Aufgabe wird bei der eingangs genannten Vorrichtung dadurch gelöst, daß die Steuereinrichtung eine Schalteinheit, eine Spannungsstabilisierungseinheit und eine Phasenanschnittsteuereinheit aufweist, wobei die Schalteinheit von der Phasenanschnittsteuereinheit angesteuert wird derart, daß sie die Spannungsstabilisierungseinheit während einer Halbwelle für eine vorgebbare den Phasenwinkel bestimmende Zeitdauer aktiviert, um die Steuerspannung während dieser Zeitdauer im wesentlichen konstant zu halten.

Das heißt mit anderen Worten, daß die am Zündkondensator anliegende Spannung so gesteuert wird, daß sie - in Abkehr zu den bisherigen Lösungen - nicht eine vom eingestellten Phasenwinkel abhängige Steigung aufweist, sondern vielmehr zunächst steil ansteigt (erste Phase), über eine bestimmte Zeitdauer abhängig vom Phasenwinkel konstant gehalten wird (zweite Phase) und danach wieder steil ansteigt (dritte Phase). Der Phasenwinkel wird damit durch Einstellen der zweiten Phase erzielt.

Der Vorteil dieser Lösung ist darin zu sehen, daß die Empfindlichkeit der Vorrichtung gegenüber Bauteiltoleranzen deutlich vermindert wird. Durch den steilen Anstieg der Spannung an dem Zündkondensator in der ersten und in der dritten Phase, spielen diese im Vergleich zu der mittleren Phase mit konstanter Spannung eine vernachlässigbare Rolle, so daß Bauteiltoleranzen des Zündkondensators und des in Reihe dazu liegenden Widerstands sowie des DIACS und der Netzspannung nicht mehr ins Gewicht fallen. Der Phasenwinkel wird letztlich alleine durch die Zeitdauer der zweiter Phase bestimmt.

Darüber hinaus läßt sich mit dieser erfindungsgemäßen Lösung jeder gewünschte Phasenwinkel präzise einstellen.

In einer bevorzugten Weiterbildung umfaßt die Steuereinrichtung eine Reihenschaltung aus einem Widerstand und einem Kondensator, wobei die Reihenschaltung an der Versorgungsspannung angeschlossen ist und die an der Kapazität anliegende Spannung die Steuerspannung ist. Vorzugsweise weist die Spannungsstabilisierungseinheit eine Zenerdiode auf. Es ist weiter bevorzugt, daß die Schalteinheit eine Transistor-Darlingtonschaltung aufweist, die in Reihe mit der Spannungsstabilisierungseinheit angeordnet ist. Ferner ist bevorzugt, daß die Phasenanschnittsteuereinheit ein RC-Glied aufweist, wobei dessen Ladespannung veränderlich ist und der Einstellung der "Aktivierungs-Zeitdauer" der Spannungsstabilisierungseinheit (das heißt der Phase mit konstanter Spannung) und damit des Phasenwinkels dient.

Die vorgenannten Maßnahmen haben sich in der Praxis als besonders vorteilhaft im Hinblick auf die Funktionsweise und den konstruktiven Aufwand der Schaltung herausgestellt. Insbesondere läßt sich mit Hilfe einer Zenerdiode eine einfache Spannungsstabilisierungseinheit aufbauen. Es versteht sich jedoch, daß die Spannungsstabilisierungseinheit selbstverständlich auch aus anderen Bauelementen aufgebaut sein kann.

In einer bevorzugten Weiterbildung ist parallel zu dem Kondensator des RC-Glieds ein Schaltelement angeordnet, das den Kondensator zum schnellen Entladen zu einem vorgebbaren von der Versorgungsspannung abhängigen Zeitpunkt kurzschließt.

Diese Maßnahme hat den Vorteil, daß der die Konstantspannungsphase bestimmende Kondensator am Ende eines Zykluses schnell entladen werden kann, so daß im nächsten Zyklus (das heißt Halbwelle der Versorgungsspannung) der Kondensator vollständig entladen ist. Es läßt sich damit gewährleisten, daß sich der Kondensator keine Werte aus einem vorhergehenden Zyklus "merkt".

In einer bevorzugten Weiterbildung ist in Reihe zu der Phasenanschnittsteuereinheit eine Anlaufsteuereinheit vorgesehen, die einen sanften Anlauf des Verbrauchers bewirkt.

Ein solcher Sanftanlauf wird unter anderem deshalb eingesetzt, um die Höhe des Stromstoßes beim Einschalten eines Verbrauchers zu begrenzen und damit die sogenannte Flicker-Norm zu erfüllen. Diese Sanftanlaufsteuereinheit ist bei der erfindungsgemäßen Vorrichtung besonders einfach umzusetzen.

Die der Erfindung zugrunde liegende Aufgabe wird auch durch ein Verfahren zur Leistungssteuerung gelöst, das sich dadurch auszeichnet, daß die Steuerspannung für das Zündelement so erzeugt wird, daß sie zunächst steil ansteigt, dann während einer einstellbaren Zeitdauer im wesentlichen konstant bleibt und anschließend wieder steil ansteigt, bis die Zündspannung erreicht ist.

Dieses Verfahren erreicht die bereits mit Bezug auf die Vorrichtung beschriebenen Vorteile.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels im Bezug auf die Zeichnung näher erläutert. Dabei zeigen:
- Fig. 1: ein schematisches Blockdiagramm der erfindungsgemäßen Vorrichtung;
- Fig. 2: ein Diagramm zur Erläuterung des Spannungsverlaufs an einem Zündkondensator, und
- Fig. 3: ein Blockschaltdiagramm einer bevorzugten Ausführungsform der in Figur 1 gezeigten Vorrichtung.

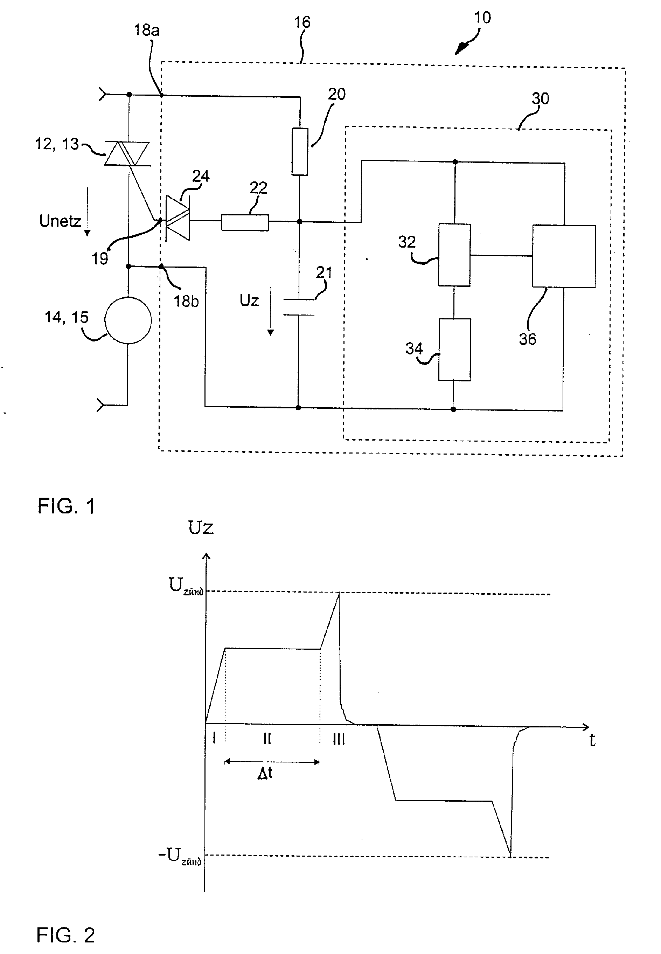

In Fig. 1 ist eine Phasenanschnittsteuerschaltung (nachfolgend Phasenanschnittsteuerung genannt) gezeigt und mit dem Bezugszeichen 10 gekennzeichnet. Die Phasenanschnittsteuerung 10 umfaßt ein Schaltungselement 12, das vorzugsweise als TRIAC 13 ausgebildet ist. In Reihe zu dem Schaltungselement 12 liegt ein elektrischer Verbraucher 14. Im vorliegenden Ausführungsbeispiel wird von einem Elektromotor 15 als elektrischer Verbraucher ausgegangen.

Die Reihenschaltung aus Verbraucher 14 und Schaltungselement 12 wird über eine Wechselspannung U_{netz} mit Energie versorgt.

Der TRIAC 13 wird über eine Ansteuerungsschaltung angesteuert, die in Fig. 1 gestrichelt dargestellt und mit dem Bezugszeichen 16 bezeichnet ist. Die Ansteuerungsschaltung 16 umfaßt zwei Eingänge 18a und 18b sowie einen Steuerausgang 19. Der Steuerausgang 19 ist mit einem Steuereingang (Gate) des TRIACS 13 verbunden, während die Eingänge 18a, 18b parallel zu dem TRIAC 13 geschaltet sind.

Die Ansteuerungsschaltung 16 umfaßt einen Widerstand 20 und einen Kondensator 21, die in Reihe geschaltet sind und zwischen den beiden Eingängen 18a und 18b liegen.

Die an dem Kondensator 21 anliegenden Spannung U_{Z} wird über eine Reihenschaltung aus einem Widerstand 22 und einem DIAC 24 dem Ausgang 19 und damit dem Steuereingang des TRIACS 13 zugeführt. Parallel zu dem Kondensator 21 ist eine Spannungssteuereinheit gestrichelt dargestellt und mit dem Bezugszeichen 30 gekennzeichnet. Die Funktion dieser Spannungssteuereinheit 30 wird später noch detailliert erläutert werden.

Die Phasenanschnittsteuerung 10 dient dazu, die dem Elektromotor 15 zugeführte elektrische Energie zu steuern. Dies erfolgt dadurch, daß der TRIAC 13 während einer Halbwelle der sinusförmigen Wechselspannung U_{Netz} eingeschaltet und beim darauffolgenden Nulldurchgang der Wechselspannung ausgeschaltet wird. Das Ansteuer- bzw. Zündsignal, das ein Ein- bzw. Durchschalten des TRIACS 13 zur Folge hat, liefert der DIAC 24, der bei Erreichen einer vorgegebenen Spannung U_{Z} (Zündspannung) durchbricht. Die Spannung U_{Z} am Kondensator 21 baut sich während einer Halbwelle auf, wobei die Zeitdauer einerseits von der Kapazität des Kondensators 21 und dem Widerstandswert des Widerstands 20 und andererseits - wie noch erläutert wird - von der Spannungssteuereinheit 30 abhängt. Wird beispielsweise eine hohe Leistung verlangt, wird die Spannungssteuereinheit so eingestellt, daß die Zündspannung während einer Halbwelle schnell erreicht wird. Im Gegensatz dazu wird bei einer geringen Leistung die Spannungssteuereinheit 30 so eingestellt, daß die Zündspannung erst am Ende einer Halbwelle erreicht wird.

In Fig. 2 ist ein Diagramm dargestellt, in dem der Verlauf der an dem Kondensator 21 abfallenden Spannung U_{Z} angegeben ist. Dieser Spannungsverlauf wird im wesentlichen durch die Spannungssteuereinheit 30 bewirkt. Der Spannungsverlauf selbst gliedert sich im wesentlichen in drei Phasen, die mit I, II und III gekennzeichnet sind. In der Phase I wird der Kondensator 21 über den Widerstand 20 durch die Netzspannung U_{Netz} geladen, bis eine Spannung U₁ erreicht ist. Danach beginnt die Phase II, in der die Spannungssteuereinheit 30 dafür sorgt, daß die Spannung U_{Z} am Kondensator 21 im wesentlichen konstant auf dem Wert U₁ verharrt, obgleich sich die Wechselspannung U_{Netz} weiter ändert. Nach Ablauf einer einstellbaren Zeit Δt wird der Kondensator 21 wieder mit der Netzspannung geladen, so daß die Spannung U_{Z} steil ansteigt. Sobald die Zündspannung U_{ZÜND} erreicht ist, zündet der DIAC 24, so daß der TRIAC 13 leitend wird und den Verbraucher 14 mit Energie versorgt. Gleichzeitig wird der Kondensator 21 u.a. über den durchgeschalteten TRIAC 12 entladen, was in Phase III durch die abfallende Kurve verdeutlicht ist.

Der gleiche Ablauf erfolgt selbstverständlich auch während einer negativen Halbwelle der Netzspannung, was in der Fig. 2 durch den nachfolgenden Spannungsverlauf bis zur negativen Zündspannung -U_{ZÜND} dargestellt ist.

Aus Übersichtlichkeitsgründen wurde die Steigung des Spannungsverlaufs U_{Z} in den Phasen I und III flach dargestellt. In der Praxis ist die Zeitdauer der Phase I bzw. III im Verhältnis zur Zeitdauer Δt der Phase II vernachlässigbar klein. Das heißt, daß die Steigung der Spannung in Phase I und III sehr groß ist.

Um den beschriebenen Spannungsverlauf an dem Kondensator 21 zu erreichen, weist die Spannungssteuereinheit ein Schaltungselement 32 und ein Spannungsstabilisierungselement 34 auf. Beide Elemente 32 und 34 sind in Reihe geschaltet und liegen parallel zum Kondensator 21. Das Schaltelement 32 wird von einer Ansteuereinheit 36 angesteuert, wobei der Ansteuereinheit 36 ebenfalls die Spannung U_{Z} zugeführt wird.

Die Funktion der Ansteuereinheit 36 besteht darin, das Schaltelement 32 zu aktivieren, das heißt zu schließen, wenn die Spannung U_{Z} den Wert U₁ erreicht. Von diesem Zeitpunkt an liegt das Spannungsstabilisierungselement 34 parallel zu dem Kondensator 21 und sorgt dafür, daß die Spannung U_{Z} konstant auf dem Wert U₁ gehalten wird, obgleich die Spannung U_{Netz} steigt.

Nach Ablauf einer einstellbaren Zeitdauer Δt wird die Ansteuereinheit 36 das Schaltelement 32 wieder deaktivieren, so daß die Spannungsstabilisierung durch das Spannungsstabilisierungselement 34 beendet wird mit dem Ergebnis, daß die am Kondensator 21 abfallende Spannung wieder steigt.

Die Zeitdauer Δt läßt sich in der Ansteuereinheit 36 beispielsweise durch ein RC-Glied erreichen, das sich nach dem Aktivieren des Schaltelements 32 lädt und bei Erreichen der vorgebbaren Ladespannung das Schaltelement 32 wieder deaktiviert.

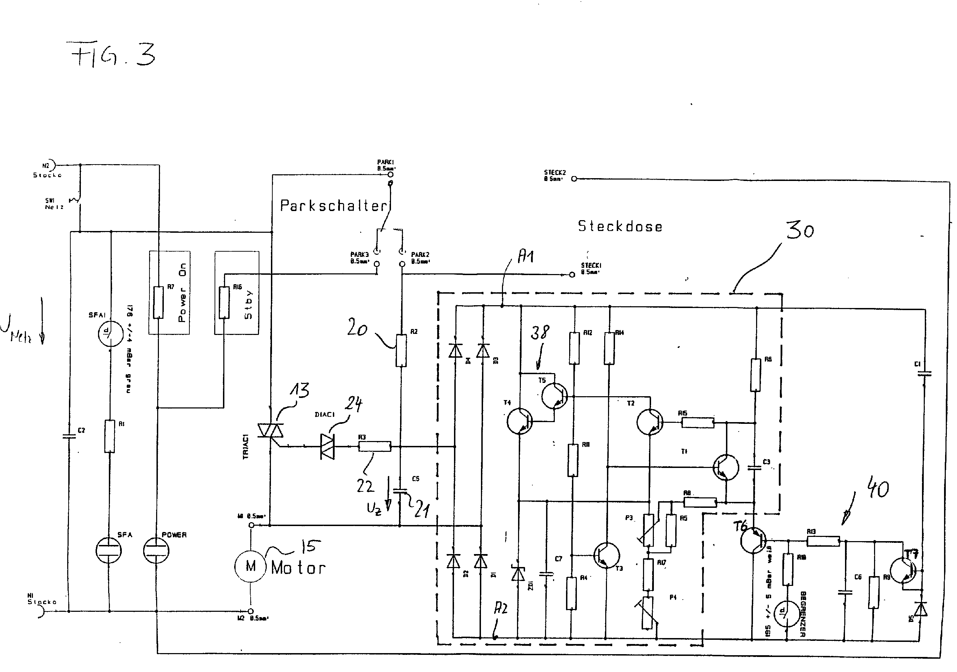

Dies ist der grundsätzliche Aufbau der Phasenanschnittsteuerung unter Zugrundelegung der erfindungsgemäßen technischen Lehre. Für den Durchschnittsfachmann ergibt sich, daß eine konkrete Realisierung einer solchen Spannungssteuereinheit auf vielfältige Art und Weise erfolgen kann. Rein beispielhaft ist in Fig. 3 eine bevorzugte Ausgestaltung einer Spannungssteuereinheit 30 dargestellt. Sie ist durch eine gestrichelte Linie kenntlich gemacht.

Ansonsten sind in Fig. 3 für gleiche Teile wie in Fig. 1 die gleichen Bezugszeichen verwendet, so daß auf deren nochmalige Beschreibung verzichtet werden kann.

Die Spannungssteuereinheit 30 weist eine aus insgesamt vier Dioden D₁ bis D₄ bestehende Brückengleichrichterschaltung auf, die parallel zu dem Kondensator 21 liegt. Diese Brückengleichrichterschaltung stellt eine gleichgerichtete Spannung zwischen den Punkten A₁ und A₂ zur Verfügung.

Zwischen diesen beiden Punkten A₁ und A₂ liegt eine Reihenschaltung aus einer aus zwei Transistoren T₄, T₅ aufgebauten Darlington-Schaltung 38 und einer Zenerdiode Z_{D1}. Parallel hierzu liegt eine Reihenschaltung aus drei Widerstände R₁₂, R₁₁ und R₄, wobei die Spannung zwischen den beiden Widerständen R₁₂ und R₁₁ abgegriffen und dem Steuereingang der Darlington-Schaltung 38 (das heißt der Basis des Transistor T₅) zugeführt wird. Diese vorgenannten Bauelemente T₄, T₅, Z_{D1}, R₁₂, R₁₁ und R₄ bilden die in Fig. 1 gezeigte Reihenschaltung aus Schaltelement 32 und Spannungsstabilisierungselement 34. Die Funktion des Schaltelements 32 wird hierbei im wesentlichen durch die Darlington-Schaltung 38 und das Spannungsstabilisierungselements 34 durch die Zenerdiode Z_{D1} erreicht.

Parallel zu der Reihenschaltung der Widerstände R₁₂, R₁₁ und R₄ ist eine Reihenschaltung aus einem Widerstand R₁₄ und einem Transistor T₃ angeordnet, wobei die Spannung zwischen den beiden Widerständen R₁₁ und R₄ abgegriffen und der Basis des Transistors T₃ zugeführt wird.

Zwischen den beiden Punkten A₁ und A₂ liegt ferner eine Reihenschaltung aus einem Widerstand R₅, einem Kondensator C₃, einem weiteren Widerstand R₈, einem Potentiometer P₃, einem Widerstand R₁₇ und einem weiteren Potentiometer P₄. Diese Widerstände bilden zusammen mit dem Kondensator C₃ ein RC-Glied, das Teil der Ansteuereinheit 36 ist und die Zeitdauer Δt bestimmt. Parallel zu dem Kondensator C₃ ist ein Transistor T₁ angeordnet, dessen Basis am Kollektor des Transistors T₃ liegt.

Die Ansteuereinheit 36 umfaßt ferner einen Transistor T₂, dessen Basis über ein Widerstand R₁₅ am Mittelabgriff zwischen Widerstand R₅ und Kondensator C₃ anliegt und dessen Emitter-Kollektor-Strecke im geschlossenen Zustand eine Verbingung zwischen der Basis und dem Emitter der Darlington-Schaltung 38 herstellt.

Die Funktionsweise dieser Spannungssteuereinheit 30 wird nachfolgend erläutert.

Die Spannungsstabilisierung der Spannung U_{Z} am Kondensator 21 wird in der Phase II über die Bauteile Z_{D1}, T₄, T₅, R₁₂, R₁₁, R₄ und die Basis-Emitter-Strecke von T₃ realisiert.

In der Phase I ist die Spannung zwischen den Punkten A₁ und A₂ so gering, daß die Darlington-Schaltung 38 sperrt. Nach Erreichen einer bestimmten vorgegebenen Spannung zwischen den Punkten A₁ und A₂ wird die Darlington-Schaltung 38 leitend, so daß die Zenerdiode Z_{D1} die Spannung zwischen den Punkten A₁ und A₂ auf den vorgegebenen Wert stabilisiert. Diese stabilisierte Spannung wird dem Kondensator 21 aufgeprägt.

Gleichzeitig wird der Kondensator C₃ über den Widerstand R₅ und die anderen genannten Widerstände R₈, P₃, R₁₇ und P₄ geladen, wobei die Ladezeit über P₃ einstellbar ist. Sobald die Spannung am Kondensator C₃ einen bestimmten vorgegebenen Wert erreicht, wird der Transistor T₂ leitend, mit dem Ergebnis, daß durch die Verbindung der Basis der Darlington-Schaltung 38 mit dessen Emitter, diese in den gesperrten Zustand überführt wird. Damit ist die Phase II und folglich die Spannungsstabilisierung beendet und die Spannung U_{Z} am Kondensator 21 steigt wieder steil an, wie dies in Fig. 2 dargestellt ist. Sobald die Zündspannung erreicht ist, bricht der DIAC 24 durch und schaltet den TRIAC 13 in den leitenden Zustand. Die Spannung U_{Z} am Kondensator 21 fällt anschließend ab.

Der Kondensator C₇, der parallel zu der Zenerdiode Z_{D1} angeordnet ist, verhindert nach dem Zünden des DIACS für einen kurzen Moment, daß die Spannung über der Zenerdiode Z_{D1} zusammenbricht, so daß über die Gegenkopplung von P₃, R₈ und C₃ das Sperren von T₄ und T₅ verhindert wird. Dies tritt insbesondere dann auf, wenn der Schleifer von P₃ am oberen Anschlag steht.

Die beiden Transistoren T₁ und T₃ und der Widerstand R₁₄ haben die Aufgabe, den zeitbestimmenden Kondensator C₃ schnell zu entladen, wenn die über die Gleichrichterschaltung D₁ bis D₄ angelegte Spannung soweit absinkt (das ist der Fall, wenn der TRIAC leitend ist oder ein Nulldurchgang der Versorgungsspannung stattfindet), daß T₃ sperrt. Dies gewährleistet, daß auch bei sehr später Zündung in einer Halbwelle oder gar keiner Zündung C₃ in der nächsten Halbwelle wieder bei null beginnt und sich nicht an Ereignisse vor dem letzten Nulldurchgang "erinnern" kann, wodurch ansonsten Zündunsymmetrien entstehen könnten.

Über den Abgriff von P₃ lassen sich verschiedene Ausgangsspannungen zum Laden des Kondensators C₃ einstellen, so daß die Zeit bis zum leitend werden des Transistors T₂ (Zeitdauer Δt) veränderlich ist. Über das Potentiometer P₄ wird eine untere Grenze eingestellt, die sich als Mindestspannung in der gesamten Schaltung darstellt. Der Kondensator C₃ und der Widerstand R₆ werden so dimensioniert, daß die gesamte Dauer einer Halbwelle für den nachfolgenden noch zu erläuternden Sanftanlauf zur Verfügung steht. Der Widerstand R₈ wird als Folge von dem Widerstand R₆ so bestimmt, daß bei der Maximalstellung von dem Potentiometer P₃ (Abgriff ganz oben) der horizontale Teil des Spannungsverlaufs in Phase II auf null zusammenfällt. Der parallel zu dem Potentiometer P₃ angeordnete Widerstand R₅ liniarisiert die Leistung des Motors mit dem Schiebeweg bzw. Drehwinkel des Potentiometers P₃.

Diese so beschriebene Spannungssteuereinheit 30 ermöglicht es jetzt, jeden gewünschten Zündwinkel präzise einzustellen. Für die Fertigungstoleranzen sind nur noch die Bauteile R₁₁, R₁₂, R₆, Z_{D1} und C₃ bedeutsam. Diese Bauteile lassen sich kostengünstig mit engen Toleranzen beschaffen, so daß auf das Potentiometer P₄ auch verzichtet werden kann, ohne die Toleranzen der Mindestspannung beliebig zu erweitern. Die gesamte Spannungssteuereinheit 30 ist nur am "Leben", das heißt unter Spannung, wenn der TRIAC 13 nicht leitend ist.

Fig. 3 läßt noch eine Sanftanlaufschaltung 40 erkennen, die unter anderem einen Transistor T₆ aufweist, der parallel zu den Widerständen R₈, R₅, R₁₇ und P₄ angeordnet ist. Zu der Sanftanlaufschaltung 40 gehört des weiteren eine Reihenschaltung aus einem Kondensator C₁ und einer in Gegenrichtung angeordneten Diode D₅, die zwischen den Punkten A₁ und A₂ liegt.

Zwischen dem Kondensator C₁ und der Diode D₅ ist ein als Diode verschalteter Transistor T₇ angeordnet, der über einen Widerstand R₉ zum Punkt A₂ führt. Parallel zu dem Widerstand R₉ ist ein Kondensator C₆ angeordnet. Wiederum zu dem Kondensator C₆ liegt eine Reihenschaltung aus einem Widerstand R₁₃ einem Widerstand R₁₀ und einem Unterdruck-Begrenzungsschalter. Die Basis des Transistors T₆ ist schließlich mit der Verbindung der beiden Widerständen R₁₃ und R₁₀ verbunden.

Um einen möglichst gleichmäßigen Anlauf des Motors 15 zu erreichen, unabhängig von den Zündzeiten, innerhalb der der Triac 13 gesperrt ist, wird über die mehr oder weniger konstante Spannung des DIACS 24 und den Kondensator C₁ in jeder Halbwelle eine konstante Ladung auf den Kondensator C₆ übertragen. Die Diode D₅ sorgt für die Entladung des Kondensators C₁, während die Basis-Kollektor-Strecke von T₇ den Strom auf den Kondensator C₆ weiterleitet. Da der Transistor T₇ nur als Diode verwendet wird, wäre es auch möglich, eine Diode zu verwenden. Allerdings haben die gewöhnlichen Dioden einen sehr viel größeren Sperrstrom als die gewöhnlichen Transistoren, was sich nachteilig im Verhalten und bzgl. der Kosten für besondere Dioden auswirkt. Der Widerstand R₉ und letztlich die Basis-Emitter-Sperrspannung von T₆ begrenzen die Spannung am Kondensator C₆. Weiterhin sorgt der Widerstand R₉ für eine Wiederholung des Sanftanlaufs wenige Sekunden nach dem Abschalten.

Die Widerstände R₁₀ und R₁₃ sorgen zusammen mit dem Unterdruckschalter für eine Druckbegrenzung, beispielsweise an einem Staubsauger als elektrischen Verbraucher. Für diese Regelung spielen das Verhältnis von R₁₃ zu R₁₀ und die Zeitkonstanten, die sich aus diesen Widerständen zusammen mit dem Kondensator C₆ ergeben, die entscheidende Rolle zum richtigen Regelverhalten.

## Patentansprüche

1. Vorrichtung zur Leistungssteuerung von an ein Wechselspannungs-Versorgungsnetz angeschlossenen elektrischen Verbrauchern, mit einem in Reihe mit dem Verbraucher liegenden Schaltungselement (12, 13) (TRIAC), das von einem Zündelement (24) (DIAC) zur Ausführung eines Phasenanschnitts angesteuert wird, und einer Steuereinrichtung (20, 21,30), die dem Zündelement eine bis zu einer vorgegebenen Zündspannung ansteigende Steuerspannung zuführt, mit der der Winkel des Phasenanschnitts (Phasenwinkel) einstellbar ist, **dadurch gekennzeichnet, daß** die Steuereinrichtung 30 eine Schalteinheit (32), eine Spannungsstabilisierungseinheit (34) und eine Phasenanschnittsteuereinheit (36) aufweist, wobei die Schalteinheit (32) von der Phasenanschnittsteuereinheit (36) angesteuert wird, derart, daß sie die Spannungsstabilisierungseinheit (34) während einer Halbwelle für eine vorgebbare den Phasenwinkel bestimmende Zeitdauer (Δt) aktiviert, um die Steuerspannung während dieser Zeitdauer im wesentlichen konstant zu halten.

2. Vorrichtung nach Anspruch 1, **dadurch gekennzeichnet, daß** die Steuereinrichtung eine Reihenschaltung aus einem Widerstand (20) und einem Kondensator (21) umfaßt, die an der Versorgungsspannung angeschlossen sind, wobei die an dem Kondensator (21) anliegende Spannung (U_{Z}) die Steuerspannung ist.

3. Vorrichtung nach Anspruch 1 oder 2, **dadurch gekennzeichnet, daß** die Spannungsstabilisierungseinheit (34) eine Zenerdiode (Z_{D1}) aufweist.

4. Vorrichtung nach einem der vorhergehenden Ansprüche, **dadurch gekennzeichnet, daß** die Schalteinheit eine Transistor-Darlingtonschaltung (38) aufweist, die in Reihe mit der Spannungsstabilisierungseinheit (34) angeordnet ist.

5. Vorrichtung nach einem der vorhergehenden Ansprüche, **dadurch gekennzeichnet, daß** die Phasenanschnittsteuereinheit ein RC-Glied (R₅, C₃, P₃) aufweist, wobei dessen Widerstand veränderlich ist und der Einstellung der Aktivierungs-Zeitdauer (Δt) der Spannungsstabilisierungseinheit (34) und damit des Phasenwinkels dient.

6. Vorrichtung nach Anspruch 5, **dadurch gekennzeichnet, daß** parallel zu dem Kondensator (C₃) des RC-Glieds ein Schaltelement (T₁) angeordnet ist, das dem Kondensator (C₃) zum schnellen Entladen zu einem vorgebbaren von der Versorgungsspannung abhängigen Zeitpunkt "kurzschließt".

7. Vorrichtung nach einem der vorhergehenden Ansprüche, **dadurch gekennzeichnet, daß** in Reihe zu der Phasenanschnittsteuereinheit (36) eine Anlaufsteuereinheit (40) vorgesehen ist, um einen sanften Anlauf des Verbrauchers (15) zu bewirken.

8. Verfahren zu Leistungssteuerung von an ein Wechselspannungs-Versorgungsnetz angeschlossenen elektrischen Verbrauchern, mit einem in Reihe mit dem Verbraucher liegenden Schaltelement, das von einem Zündelement angesteuert wird, wobei dem Zündelement eine während einer Halbwelle steigende Steuerspannung zugeführt wird, bis eine Zündspannung (U_{Zünd}) erreicht ist und das Zündelement (24) das Schaltelement (13) bis zur nächsten Halbwelle der Versorgungsspannung in den leitenden Zustand versetzt, **dadurch gekennzeichnet, daß** die Steuerspannung an dem Zündelement (24) so erzeugt wird, daß sie zunächst steil ansteigt, dann während einer einstellbaren Zeitdauer (Δt) im wesentlichen konstant bleibt und anschließend wieder steil ansteigt, bis die Zündspannung (U_{Zünd}) erreicht ist.
